(19) Europäisches Patentamt

European Patent Office    (11) Numéro de publication : **0 028 566**

Office européen des brevets    **B1**

## (12) FASCICULE DE BREVET EUROPÉEN

(45) Date de publication du fascicule du brevet :
**13.07.83**

(21) Numéro de dépôt : **80401545.1**

(22) Date de dépôt : **30.10.80**

(51) Int. Cl.³ : **H 01 M   6/34**

(54) **Pile active à l'eau de mer.**

(30) Priorité : **05.11.79 FR 7927221**

(43) Date de publication de la demande :
**13.05.81 Bulletin 81/19**

(45) Mention de la délivrance du brevet :
**13.07.83 Bulletin 83/28**

(84) Etats contractants désignés :
**DE GB IT NL**

(56) Documents cités :
**FR A 1 450 294**
**FR A 2 053 489**
**FR A 2 126 395**
**FR A 2 210 831**
**FR A 2 333 357**
**US A 3 811 945**

(73) Titulaire : **THOMSON-CSF**
**173, Boulevard Haussmann**
**F-75379 Paris Cedex 08 (FR)**

(72) Inventeur : **Rouge, Jean**
**"THOMSON-CSF" SCPI 173, Bld Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

Pile active à l'eau de mer

La présente invention concerne les batteries de piles, ou piles amorçables et activées à l'eau de mer et plus particulièrement les piles destinées à équiper des bouées radio-sonores utilisées dans la détection sous-marine.

Usuellement de telles piles comportent des éléments logés dans un boîtier isolant, dans lequel sont aménagées les ouvertures nécessaires à l'entrée de l'eau et aux dégagements gazeux. Il est connu que chaque élément est constitué par deux électrodes appelées anode et cathode. Les éléments sont connectés électriquement en série de manière que l'anode d'un élément soit reliée à la cathode de l'élément adjacent.

Lors de la mise en service par immersion, l'électrolyte, généralement l'eau de mer, pénètre entre les électrodes par des ouvertures vers l'extérieur aménagées au niveau de chaque élément. Ainsi il se crée dans l'électrolyte conducteur environnant un chemin électrique entre les électrodes d'un élément quelconque et les électrodes de chacun des autres éléments. Ces électrodes étant à des potentiels différents les uns par rapport aux autres des courants électriques de fuite s'établissent entre l'une quelconque des électrodes et chacune des autres.

Le brevet français « PERFECTIONNEMENT AUX PILES DE BATTERIES AMORCABLES A L'EAU DE MER », N° 1 435 048, déposé le 21 Février 1965, décrit des piles amorçables à l'eau de mer comportant principalement, pour chaque élément, un obturateur qui permet d'obtenir lorsqu'il est fermé l'étanchéité de l'élément, cet obturateur pouvant être ouvert pendant de brèves périodes au cours du temps de service de la pile pour permettre l'introduction de l'électrolyte, son renouvellement et l'évacuation du dégagement gazeux.

Si ces piles ont une durée de vie accrue, elles présentent l'inconvénient de mettre en œuvre des dispositifs relativement complexes peu compatibles avec les impératifs de fabrication en grande série au moindre coût.

Il existe d'autres types de piles, plus simples, pour lesquelles les ouvertures aménagées dans le boîtier ne sont pas obturables. L'électrolyte est laissé en libre circulation entre les éléments et entre l'intérieur de la pile et l'extérieur. Les courants électriques de fuite entre les éléments passant par l'électrolyte sont alors généralement importants et donnent lieu à une usure accélérée des électrodes diminuant la durée de vie de la pile.

Pour compenser cette usure, il est indispensable pour avoir une durée de vie acceptable, d'augmenter la quantité de métal formant les électrodes. Ceci est un inconvénient compte tenu que les métaux utilisés pour les électrodes sont coûteux ce qui grève le prix de ce matériel.

La pile suivant l'invention remédie à ces inconvénients en permettant de réaliser des piles de fabrication simple, avec des électrodes contenant moins de métal que les piles à ouvertures non obturables.

Brièvement c'est une pile, activée par immersion dans l'eau de mer, composée de plusieurs éléments, chaque élément comportant deux électrodes et ces éléments étant connectés électriquement en série et séparés par des cloisons étanches, chaque élément communiquant avec l'extérieur par des moyens de remplissage et des moyens d'évacuation des dégagements gazeux caractérisé par le fait que des moyens de remplissage et d'évacuation du gaz comportent chacun un tube, appelé tube de raccord traversant les cloisons étanches séparant les éléments et communiquant avec l'extérieur et que perpendiculairement sur chacun de ces tubes de raccord est monté un réseau de tubes, débouchant chacun dans un élément de la pile permettant ainsi le remplissage et l'évacuation des gaz de chaque élément, et que les tubes de raccord communiquent chacun avec l'extérieur par un tube, placé coaxialement à l'intérieur d'un tube de raccord, chaque tube débouchant par une extrémité à l'intérieur, l'autre extrémité étant en communication avec le tube de raccord.

D'autres caractéristiques ressortiront de la description qui va suivre, illustrée par les figures qui représentent :

figure 1 une vue générale en perspective de la pile suivant l'invention ;

figures 2a et 2b deux vues en coupe de cette pile ;

figure 3 une vue plus détaillée des tuyaux montrant la circulation de l'eau de mer dans la pile ;

figure 4 un schéma électrique équivalent des résistances de fuite de la pile.

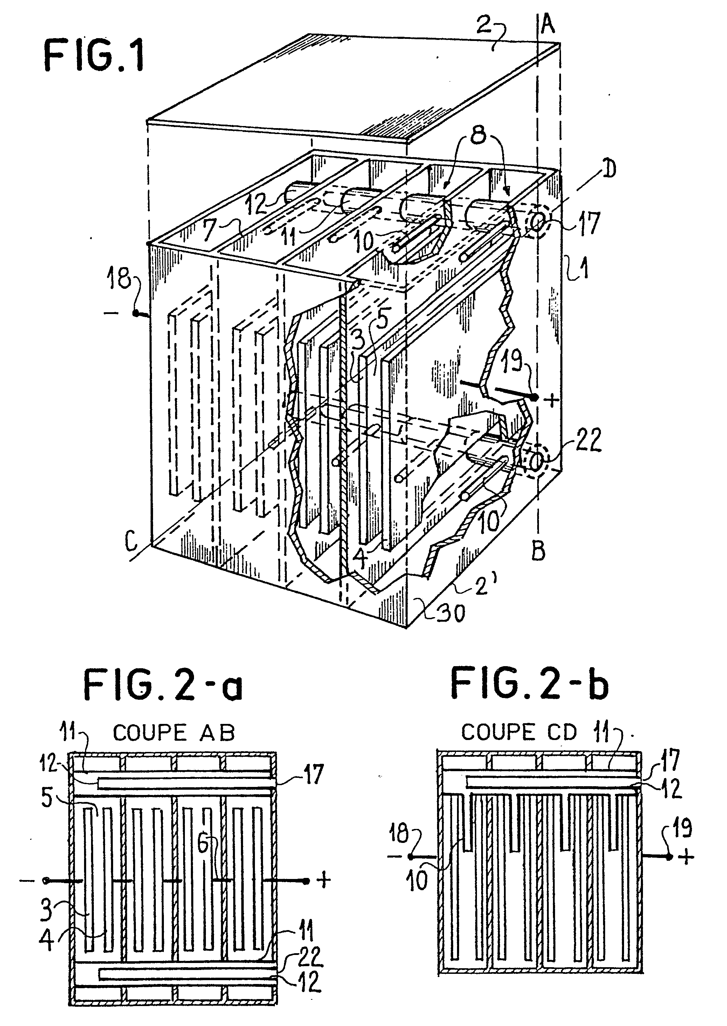

La pile selon l'invention est représentée schématiquement sur la figure 1 ; sur la figure 2a elle est représentée en coupe suivant AB et sur la figure 2b en coupe suivant CD. La pile est composée de plusieurs éléments 8 placés à l'intérieur d'un boîtier 1, séparés par des cloisons étanches 7, et reliés électriquement en série. Chaque élément comporte deux plaques formant les électrodes, l'anode 3 et la cathode 4 laissant entre elles un espace 5 nécessaire à l'introduction de l'électrolyte. Entre chaque élément un passage étanche 6 est pratiqué dans la cloison 7 permettant d'établir la liaison électrique entre la cathode d'un élément et l'anode de l'élément adjacent.

La pile équipe par exemple un système destiné à être immergé dans la mer tel qu'une bouée radioélectrique ultrasonore largable d'un aéronef. Le système étant en fonctionnement normal, la pile se trouve dans la position pour laquelle la plaque 2 définit le haut de la pile tandis que la plaque 2' définit le bas. La pile est activée lorsque tous les éléments 8 sont remplis de l'électrolyte qui est l'eau de mer. La pile comporte selon l'invention des aménagements de distribution de l'électrolyte, qui permettent de réduire les courants électriques de fuite.

La pile comporte au moins deux ouvertures vers l'extérieur 17 et 22 situées respectivement en haut et en bas. A chaque ouverture correspond un même réseau de tubes. Chaque réseau est composé de deux tubes coaxiaux 11 et 12 dont l'axe est perpendiculaire aux cloisons 7 et une série de tubes 10 raccordés perpendiculairement au tube 11, leur extrémité débouchant au niveau de chaque élément de sorte que le nombre de tubes 10 est égal au nombre d'éléments de la pile.

Une extrémité du tube 12 constitue la seule ouverture vers l'extérieur, l'autre extrémité débouchant dans le tube 11.

Lorsque la pile se trouve immergée, l'eau de mer pénètre principalement par l'ouverture située en bas 22, la pression hydrostatique y étant plus élevée qu'au niveau de l'ouverture située en haut 17 et par laquelle l'air est chassé.

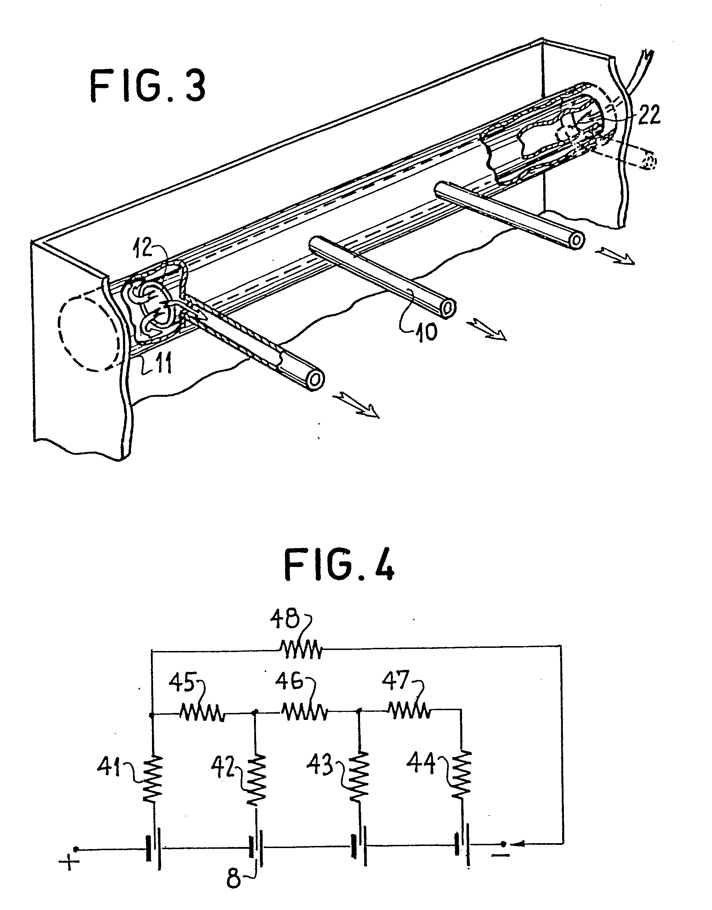

Comme indiqué schématiquement sur la figure 3, le chemin suivi par l'eau de mer vers l'intérieur de la pile est constitué par le tube 12 puis par l'intervalle entre le tube 12 et le tube 11 et par les tubes 10. A la fin du remplissage, les deux réseaux de tubes se trouvent remplis d'eau de mer et, au cours du fonctionnement, les dégagements gazeux sont évacués par l'ouverture supérieure 17.

Le niveau de remplissage dépend d'une part de la pression de capillarité et de la pression hydrostatique. La pression de capillarité est inversement proportionnelle au rayon du tube 10, qui a les plus faibles dimensions, et le niveau de remplissage de la pile sera d'autant plus grand que la pression P de capillarité des tubes sera faible devant la différence de pression hydrostatique entre les deux ouvertures 17 et 22. En outre, le temps de remplissage sera d'autant plus faible que la section des tubes sera grande.

Il est également bien connu que pour un tube conducteur de longueur l et de section s la résistance électrique R est égale à $R = l/ks$ où $k$ est la conductivité. De même le temps de remplissage est également proportionnel à $l/s$.

Une augmentation de la résistance électrique R implique une augmentation de la longueur l du tube et une diminution de la section s. Cependant, en diminuant trop la section, on augmenterait le temps de remplissage et également la pression P de capillarité qui limiterait le niveau du remplissage.

Pour la pile suivant l'invention les tubes 10 des deux réseaux ont des sections choisies pour obtenir d'une part un temps de remplissage compatible avec les conditions opérationnelles désirées, par exemple de l'ordre de la minute, et d'autre part un niveau de remplissage jusqu'à l'immersion complète des plaques ; et les longueurs de ces tubes sont choisies en fonction des sections pour obtenir des valeurs de résistances électriques suffisamment importantes pour limiter les courants de fuite.

Une telle optimisation des paramètres, niveau de remplissage, temps de remplissage et résistances de fuite n'était pas possible avec les piles suivant l'art antérieur et comportant un trou de remplissage et un trou pour l'évacuation des gaz dans les faces 2 et 2' pour chaque élément.

La figure 4 représente le schéma électrique équivalent à un réseau distributeur. Les résistances électriques 41, 42, 43, 44 sont formées par les tubes 10 tandis que les résistances 45, 46, 47 qui ne sont pas égales sont formées par l'espace annulaire entre les tubes 11 et 12. Si l'une des bornes de la pile est reliée à l'eau de mer par l'intermédiaire du châssis de l'appareil, par exemple la borne négative, la résistance 48, formée par le tube 12, permet de réduire les courants de fuite entre cette borne qui est au potentiel de l'eau de mer et chacun des éléments de la pile. Avantageusement, les ouvertures 17 et 22 peuvent être situées sur la face qui correspond à la borne ayant le potentiel le plus élevé par rapport à l'eau de mer. Le trajet à l'intérieur du tube 12 et puis du tube 11 entre l'ouverture extérieure et le tube 10 de l'élément à potentiel le plus élevé est ainsi maximum ; de plus l'augmentation de la résistance électrique entre l'eau de mer et un élément est d'autant plus grande que le potentiel de cet élément est plus élevé.

On utilise souvent des piles dont l'anode est constituée par du magnésium et la cathode par du chlorure d'argent, ce couple électrochimique étant très efficace dans une pile activée à l'eau salée.

Le chlorure d'argent est un matériau cher et la limitation des courants de fuite obtenues selon l'invention permet de diminuer la masse de chlorure d'argent d'environ 30 % par rapport aux piles non obturables en conservant des performances identiques dans des mêmes conditions d'utilisation.

A titre d'exemple une pile 12 volts de ce type a été réalisée comportant huit éléments de 1,5 volt chacun dans laquelle les tubes sont de section circulaire. Les tubes tels que 10 ont un diamètre d'environ 3 mm avec une longueur d'environ 30 mm. La longueur et le diamètre d'un tube 11 sont respectivement de l'ordre de 55 mm et de 8 mm tandis qu'ils sont de l'ordre de 32 mm et 4 mm pour un tube 12.

Le temps de remplissage complet de cette pile après son immersion dans l'eau salée est de l'ordre de la minute.

Suivant une variante de l'invention le dispositif décrit est simplifié en supprimant les tubes 11 et 12 et en faisant déboucher les tubes 10 directement vers l'extérieur ou en supprimant le tube 12, le tube 11 débouchant directement vers l'extérieur.

Suivant une autre variante de l'invention les deux tubes 11 sont placés à proximité des deux faces latérales opposées de la pile, les tubes 10 de chaque réseau étant orientés en sens inverse ; par exemple l'ouverture 22 serait située dans le coin 30 sur la figure 1.

## Revendications

1. Pile, activée par immersion dans l'eau de mer, composée de plusieurs éléments (8), chaque élément (8) comportant deux électrodes (3, 4) et ces éléments (8) étant connectés électriquement en série et séparés par des cloisons étanches (7) chaque élément communiquant avec l'extérieur par des moyens de remplissage et des moyens d'évacuation des dégagements gazeux, caractérisée par le fait que les moyens de remplissage et d'évacuation des gaz comportent chacun un tube (11), appelé tube de raccord traversant les cloisons étanches (7) séparant les éléments et communiquant avec l'extérieur et que perpendiculairement sur chacun de ces tubes de raccord (11) est monté un réseau de tubes (10), débouchant chacun dans un élément de la pile permettant ainsi le remplissage et l'évacuation des gaz de chaque élément, et que les tubes de raccord (11) communiquent chacun avec l'extérieur par un tube (12) placé coaxialement à l'intérieur d'un tube de raccord (11), chaque tube (12) débouchant par une extrémité à l'extérieur, l'autre extrémité étant en communication avec le tube de raccord (11).

2. Pile suivant la revendication 1, caractérisée par le fait que les moyens permettant de faire communiquer les tubes (12) avec l'extérieur sont tels que les ouvertures vers l'extérieur sont placées sur la même face de la pile que la borne en contact avec la mer, qui correspond au potentiel le plus élevé par rapport à l'eau de mer.

## Claims

1. A battery activated by immersion in sea water and constituted by a plurality of elements (8), each element (8) comprising two electrodes (3, 4), and said elements (8) being electrically connected in series and separated from each other by tight separating walls (7), each element communicating with the exterior by filling means and outlet means for evacuating the evolving gases, characterized in that said filling means and said outlet means for evacuating the gases comprise each a connecting tube (11) which passes through said tight separating walls (7) which separate said elements and which communicates with the exterior, in that, perpendicularly to each one of said connecting tubes (11), a network of tubes (10) is provided, each one of which opens into an element of the battery so as to permit the filling of each element and the evacuation of the gases therefrom, and in that said connecting tubes (11) communicate each with the exterior by a tube (12) mounted coaxially within a connecting tube (11), each one of said tubes (12) opening by one of its ends at the exterior, while its other end communicates with the connecting tube (11).

2. A battery according to claim 1, characterized in that the means for connecting said tubes (12) to the exterior are so arranged that the apertures directed to the exterior are provided on that face of the battery on which is located the terminal contacting the sea, which corresponds to the maximum potential with respect to the sea water.

## Ansprüche

1. Durch Eintauchen in Meerwasser aktivierbare, aus mehreren Elementen (8) bestehende Batterie, bei der jedes Element (8) zwei Elektroden (3, 4) aufweist und diese Elemente (8) miteinander elektrisch in Reihenschaltung verbunden sind und durch dichte Trennwandungen (7) voneinander getrennt sind, wobei jedes Element mit der äusseren Umgebung durch Füllmittel und Mittel zum Auslassen der entstehenden Gase verbunden ist, dadurch gekennzeichnet, dass die Füll- und Gasauslassmittel je eine Verbindungsrohrleitung (11) aufweisen, welche die die Elemente voneinander trennenden dichten Trennwandungen (7) durchdringen und mit der äusseren Umgebung in Verbindung stehen, während senkrecht zu jeder Verbindungsrohrleitung (11) ein Netz von Rohrleitungen (10) angeordnet ist, deren jede in ein Element der Batterie mündet, um das Füllen desselben und das Auslassen der Gase aus diesem Element zu ermöglichen, und dass jede der Verbindungsrohrleitungen (11) über ein koaxial innerhalb einer Verbindungsrohrleitung (11) angeordnetes Rohr (12) mit der äusseren Umgebung verbunden ist, wobei jedes Rohr (12) mit einem seiner Enden in die äussere Umgebung mündet und sein anderes Ende mit der Verbindungsrohrleitung (11) in Verbindung steht.

2. Batterie nach Anspruch 1, dadurch gekennzeichnet, dass die Mittel zum Verbinden der Rohre (12) mit der äusseren Umgebung derart ausgestaltet sind, dass die nach aussen gerichteten Öffnungen auf der gleichen Oberfläche der Batterie angeordnet sind, wie die in Berührung mit dem Meer befindliche Klemme, die dem höchsten Potential in bezug auf das Meerwasser entspricht.

0 028 566

FIG.1

FIG.2-a
COUPE AB

FIG.2-b
COUPE CD

1

# FIG.3

# FIG.4